(19) Europäisches Patentamt / European Patent Office / Office européen des brevets

(11) **EP 4 697 079 A1**

(12) **EUROPEAN PATENT APPLICATION**

(43) Date of publication:
18.02.2026 Bulletin 2026/08

(51) International Patent Classification (IPC):
**G02B 27/00** $^{(2006.01)}$   **G02B 27/01** $^{(2006.01)}$

(21) Application number: 24194477.6

(22) Date of filing: 14.08.2024

(52) Cooperative Patent Classification (CPC):
**G02B 27/0172; G02B 27/0081;** G02B 2027/0123;
G02B 2027/0125

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Imec VZW**
**3001 Leuven (BE)**

(72) Inventor: **SHRAMKOVA, Oksana**
**3020 Herent (BE)**

(74) Representative: **AWA Sweden AB**
**Box 5117**
**200 71 Malmö (SE)**

(54) **DISPLAY OPTIC DEVICE WITH SINGLE WAVEGUIDE FOR COLOR IMAGES WITH LARGE FIELD-OF-VIEW**

(57)    According to an aspect there is provided a display optic device for a near-eye display, configured to receive light representing an image to be displayed to an eye, to guide the light in the display optic device, and to output the light from the display optic device towards the eye. The display optic device comprises a slab waveguide for guiding light and an in-coupler configured to couple light into the waveguide such that the light is propagated in the waveguide in a first direction and a second direction.

The in-coupler comprises:
a first grating configured to couple light of a first polarization and a first range of angles of incidence of light larger than a threshold angle, into the waveguide, and
a second grating configured to couple light of a second polarization and a second range of angles of incidence of light around and including normal incidence such that the second range is complementary to the first range.

Fig. 1A

EP 4 697 079 A1

Fig. 1B

**Description**

Technical field

The present disclosure relates to image projection displays, and more specifically to a display optic device, a near-eye display and a method of operation of a display optic device for color images with a large field-of-view.

Background

Technology related to Augmented Reality (AR), Extended Reality (XR), and Virtual Reality (VR) is rapidly growing, and has found a broad range of applications. For example, optical see-through head-mounted displays (HMD) are key devices for these applications, attracting significant interest of major industrial players. To realize a compact near-eye display system, various technologies have been developed. Currently most of the HMDs use a waveguide structure. The basic optical components integrated into the waveguide combiners consist of in-couplers, out-couplers, and expanders, e.g. eye pupil expanders (EPE, also known as relay grating).

A serious challenge in for example Extended Reality (XR) is to provide a near-eye display with full color and a large overall field-of-view. Full-color waveguide-based solutions have been developed where light may be coupled into the waveguides. However, in order to provide transmission of multiple RGB wavelengths with a large field-of-view, multi-waveguide solutions are typically employed, combining multiple stacked waveguides with high refractive index, each tuned for a different color. A drawback is that these solutions are bulky and heavy, and do not provide sufficient comfort when worn by a user.

Reducing the number of waveguides while maintaining the color information of the image and while providing a large field-of-view is desirable since it may simplify the system as well as reducing the weight and size. However, due to the strong spectral spread of the in-coupler elements, light at longer wavelengths is coupled into the waveguide at higher angles, which reduces the overall full color filed-of-view that may be propagated in the waveguide. A single RGB waveguide with high refractive index can provide higher field-of-view. However, because higher refractive index waveguides have a higher density and requires increased thickness, and therefore increased weight, such an approach does not bring any significant weight benefit for the display system as a whole.

Hence, there is a need in the art for further improvements related to display optic devices for near-eye displays.

Summary

An objective of the present disclosure is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect there is provided a display optic device for a near-eye display, the display optic device being configured to receive light representing an image to be displayed to an eye, to guide the light in the display optic device, and to output the light from the display optic device towards the eye, wherein the display optic device comprises:

a waveguide configured to guide the light, wherein the waveguide is a slab waveguide extending along an extension of the display optic device;

an in-coupler arranged at least partially in the waveguide, and configured to receive the light and couple the light into the waveguide such that the light is propagated in the waveguide in a first direction and a second direction, wherein the second direction is opposite to the first direction, and wherein the in-coupler comprises:

a first grating configured to couple light of a first polarization and a first range of angles of incidence of light into the waveguide, wherein the first range comprises angles of incidence of light larger than a threshold angle, and a second grating configured to couple light of a second polarization and a second range of angles of incidence of light into the waveguide, wherein the second polarization is perpendicular to the first polarization and wherein the second range comprises angles of incidence around and including normal incidence such that the second range is complementary to the first range.

By the term "slab waveguide" is here meant any unit, device and/or element comprising a light guiding medium having a planar shape such that the light guiding medium extends in two perpendicular directions, whereas the light guiding medium in a third direction, perpendicular to the plane, is restricted to extending only a fraction of the extension in the other two directions, essentially forming a thin plane of the light guiding medium. Light coupled into the plane may be guided in all directions within a plane, for example by being reflected on inner walls of the waveguide by total internal reflection. The light may be propagated in a slab waveguide by total internal reflection with very little light losses, providing an efficient light propagation. Given as non-limiting examples, the waveguide may be a transparent dielectric waveguide.

The display optic device may comprise a single large slab waveguide extending along at least a major part of the display optic device. Different functions for guiding light may be provided to different parts of the waveguide. By way of example, different components such as the in-coupler, expanders, and an out-coupler may be provided to different parts of the waveguide.

By way of example, the slab waveguide may comprise a single light guiding medium, such as glass, and the surrounding medium may be air. Alternatively, the slab waveguide may comprise cladding on both sides of the light guiding medium.

By the term "grating" is here meant an optical diffraction grating with a periodic structure configured to diffract light into one or more propagation directions. By selection of the grating pitch or grating period of the periodic structure, an angle under which the light exits the grating and propagates into the waveguide may be tuned. Further, by selecting the orientation of the grating with respect to the waveguide, the direction of light propagation in the waveguide may be tuned. The first and second directions of light propagation may therefore be provided by the gratings by tuning the grating pitch and thus the diffraction angles.

By way of example, in case a grating is a one-dimensional diffraction grating, light propagation may be provided in one or two opposite directions.

By way of example, the light incident onto the in-coupler corresponding to positive and negative angles of an incidence with respect to the normal may be diffracted by the in-coupler into two opposite directions, i.e. the first direction and the second direction. The present arrangement may allow for doubling of the field-of-view since light in each of the two directions, i.e. each half-image, may utilize the full angular bandwidth of the waveguide in each direction of propagation.

The second direction is opposite to the first direction, which may be interpreted as an angular difference between the first and second directions is 180 degrees. However, it should be realized that an angular difference of exactly 180 degrees is not required, and that a slight deviation from 180 degrees may provide substantially the same function of the light splitting.

By way of example, the in-coupler of the display optic device may comprise only two gratings, i.e. the first grating and the second grating, or the in-coupler may comprise three gratings, thus comprising also a third grating.

The first and second gratings are configured to couple light of the same wavelength, or rather the same wavelength range, into the waveguide, however of different polarizations. In a two-grating configuration, the first and second gratings may be tuned for diffracting light of longer wavelengths of the visible spectrum, typically red color wavelengths.

It serves to mention that by "wavelength" is here not necessarily meant a single wavelength, but may rather encompass a wavelength range. It should be understood that, although a grating is tuned for diffracting light of a certain wavelength, the grating may still diffract light of also other wavelengths, at least within a certain wavelength range around the wavelength for which the grating is tuned. Thus, green and blue color wavelengths may be diffracted by the first and second gratings tuned for red color wavelengths. However, diffraction properties such as diffraction angle may differ for other wavelengths as compared to the properties for which the grating is tuned.

The second grating is configured to couple light of the second polarization into the waveguide. The second grating may couple light having angles of incidence around and including normal incidence into the waveguide, however larger angles of incidence may not be coupled into the waveguide by the second grating. Thus, by using only the second grating, the angle of incidence, and thus the field of view, may be limited to be smaller than desired. However, the first grating is configured to couple light of the first polarization into the waveguide at larger angles of incidence. The angles are larger than the threshold angle, thus light with angles of incidence smaller than the threshold may not be coupled into the waveguide by the first grating. The combination of the first and the second grating, however, allows light of a wide range of angles of incidence to be coupled into the waveguide, thus allowing a large field-of-view.

It should be understood that the first range of angles of incidence and the second range of angles of incidence typically partially overlap. In this manner, the combination of the first range and the second range forms a continuous range of angles of incidence being coupled into the waveguide, without any gap in between the first and second ranges.

It serves to mention that by "angles of incidence around and including normal incidence" is here meant a continuous interval of angles of incidence which includes the normal incidence.

In the manner described above, the visible spectrum of the light representing the image may be split in two polarizations by the in-coupler. The present arrangement enables projection of the image towards the eye to be made, wherein the projected image is a color image with a large field-of-view. Given as a non-limiting example, with an in-coupler with two gratings according to the first aspect, and with a waveguide with a refractive index of 2, a diagonal field-of-view of 120 degrees and even up to 180 degrees or more may be provided for red, green and blue color wavelengths.

Thus, an advantage is that a display optic device may be provided, enabling an image with a large field-of-view to be guided in a single waveguide. The display optic device may provide a large field-of-view in both a horizontal and a vertical viewing angle, simultaneously.

Another advantage is that the display optic device may enable guiding a color image with a large field-of-view, within a single waveguide. Light of wavelengths from the visible spectrum may be coupled into and guided in the waveguide, such as the colors red, green and blue. In this manner the color information of the image may be maintained upon in-coupling and guiding the image through the waveguide.

Another advantage is that an improved image quality may be provided. By the present arrangement, an image to be displayed to an eye with improved resolution and contrast may be provided. By way of example, Si- or $TiO_x$-based gratings may provide high coupling efficiency and high uniformity.

As mentioned above, the display optic device may be provided by using a single waveguide. Further, the waveguide may be provided with relatively low refractive index, such as a refractive index of 2 or lower, and preferably 1.52 or lower. In conventional displays, a lower refractive index typically implies the need for an increased thickness of the waveguide, which leads to increased weight of the device. However, an advantage with the device of the first aspect is that a large field of view may be provided even with a thin waveguide. Thus, a compact and light weight display optic device may be provided. In turn, wearing a near-eye display comprising the display optic device may therefore be more comfortable for a user.

According to an embodiment, the in-coupler further comprises:

a third grating configured to couple light of the second polarization and a third range of angles of incidence of light into the waveguide, wherein the third range comprises angles of incidence around and including normal incidence, and wherein the second grating and the third grating are configured to couple light at different wavelength ranges into the waveguide.

The first and second gratings are configured to couple light of the same wavelength, or rather the same wavelength range, into the waveguide, however of different polarizations. As mentioned above, in a two-grating configuration, the first and second gratings may be tuned for diffracting light of longer wavelengths of the visible spectrum, typically red color wavelengths. In a three-grating configuration, however, the first and second gratings may be tuned to diffract light of shorter wavelengths of the visible spectrum, typically blue color wavelengths. The third grating may be tuned to diffract light of a different wavelength, or rather wavelength range, into the waveguide, however of the same polarization as the second grating. The third grating may typically be tuned to diffract light of longer wavelengths of the visible spectrum, typically red color wavelengths.

The first grating may be tuned to diffract light of blue color wavelength at high angles of incidence. However, the first grating may also diffract light of red color wavelengths at high angles of incidence. The second grating may be tuned to diffract light of blue color wavelengths at low angles of incidence. However, the second grating may also diffract light of red color wavelengths at intermediate angles of incidence. The third grating may be tuned to diffract light of red color wavelengths at low angles of incidence. It should be realized that, in case the in-coupler comprises gratings tuned to diffract blue and red color wavelengths, also the intermediate wavelengths, such as for green colors, may be coupled by the in-coupler into the waveguide.

It should be noted that if the first and second gratings of the in-coupler are configured as described above, being tuned to diffract blue color wavelengths, but without including also the third grating in the in-coupler, an angular gap may result for low angles of incidence close to the normal incidence, for green and red colors.

Given as a non-limiting example, in case an in-coupler with three gratings according to this embodiment is used, and with a waveguide with a refractive index of 1.52, a diagonal field-of-view of 98 degrees may be provided for red, green and blue color wavelengths.

An advantage with this embodiment is that a display optic device with a further reduced weight may be provided. A material with low refractive index may have a low density, and may therefore be used to provide a display optic device with low weight. Thus, a compact and light weight display optic device may be provided, further improving comfort for the user.

According to an embodiment, the third grating may be configured to, alternatively or additionally, couple light of the first polarization and a third range of angles of incidence of light into the waveguide, wherein the third range comprises angles of incidence around and including normal incidence, and wherein the second grating and the third grating are configured to couple light at different wavelength ranges into the waveguide.

According to an embodiment, the waveguide further comprises a first expander set and a second expander set, wherein

the first expander set is arranged to receive the light in the waveguide propagated in the first direction, wherein the first expander set comprises a first expander and a second expander, the first expander being configured to expand the light in a first expansion direction within the waveguide, and wherein the second expander is configured to expand the light in a second expansion direction within the waveguide, the second expansion direction being different from the first expansion direction, wherein

the second expander set is arranged to receive the light in the waveguide propagated in the second direction, wherein the second expander set comprises a third expander and a fourth expander, the third expander being configured to expand the light in a third expansion direction within the waveguide, and wherein the fourth expander is configured to expand the light in a fourth expansion direction within the waveguide, the fourth expansion direction being different from the third expansion direction, and wherein

the first expander set and the second expander set are configured to guide the light to reach a common region in the waveguide such that the light of the first expander set and the second expander set are combined.

By the term "expansion direction" is here meant a direction in which the light in the waveguide is expanded. Typically, the expansion direction has at least a component that extends along the light propagation direction. For example, the respective expanders may provide light expansion along the light propagation direction. In such case, the expansion direction may be parallel to the light propagation direction. Further, the respective expanders may provide rotation and/or redirection of the expanded light, for example in a direction perpendicular to the light propagation direction incident onto the expander.

It serves to mention that the second expansion direction may be perpendicular to the first expansion direction. However, it is equally conceivable that the first and second expansion directions are not perpendicular to one another.

Similarly, the fourth expansion direction may be perpendicular to the third expansion direction. However, it is equally conceivable that the third and fourth expansion directions are not perpendicular to one another.

Moreover, the third and fourth expansion directions may be the same as the first and second expansion directions. However, the third and fourth expansion directions may be different from the first and second expansion directions, such that the first, second, third, and fourth expansion directions correspond to four different expansion directions.

The waveguide of the display optic device is a slab waveguide wherein different regions in the slab waveguide may affect the light in different manners. For example, the waveguide comprises the first expander set and the second expander set, that affect the light propagating in the waveguide, in order to expand the field-of-view of the image represented by the light, in the horizontal and vertical directions of the display optic device.

By the horizontal and vertical directions of the display optic device are here meant the width and height directions, respectively, as seen by a user watching the display optic device when the display optic device is mounted as intended for viewing and the user is in a normal upright position looking straight ahead. Thus, it should be understood that even though the display optic device may have different orientations, the width and height of the image, and thus of the display optic device, as viewed by the user will be referred to as the horizontal and vertical directions in the present disclosure, regardless of the orientation in space of the display optic device.

The four expanders may be of the same type. However, the four expanders may have different orientations. More specifically, the four expanders may be symmetrically oriented and arranged across the display optic device. Each expander may comprise three gratings, each of which are optical diffraction gratings, having the same orientation.

By way of example, the first expander may be configured to diffract the zero orders to expand the field-of-view in the horizontal direction, and the non-zero orders to deviate the image along the vertical direction of the display optic device. The second expander may be configured to diffract the zero orders to expand the field-of-view in the vertical direction, and the non-zero orders to deviate the image along the horizontal direction of the display optic device.

Alternatively, the first expander may be configured to diffract the zero orders to expand the field-of-view in the vertical direction, and the non-zero orders to deviate the image along the horizontal direction of the display optic device, and the second expander may be configured to diffract the zero orders to expand the field-of-view in the horizontal direction, and the non-zero orders to deviate the image along the vertical direction of the display optic device.

Optionally, the third expander and the fourth expander may be configured in the same manner as the first expander and the second expander, respectively.

It serves to mention that by using two diffraction orders, the field-of-view may be split so that each of the two expander sets only operate on half of the field-of-view of the image, respectively. The gratings in each expander may be configured such that the first grating diffracts a top part of the field-of-view for blue color wavelengths, the second grating diffracts a bottom part of the field-of-view for blue color wavelengths and a top part of the field-of-view for red color wavelengths, and the third grating diffracts a bottom part of the field-of-view for red color wavelengths. As previously mentioned, also the intermediate wavelengths, such as for green colors, may be diffracted by the gratings.

By way of example, the first expander set and the second expander set may be configured to guide their respective light to reach a common region in the waveguide from opposing directions, such that the light of the first expander set and the second expander set are combined.

By combining the two paths of light again, the field-of-view will be combined again to the full field-of-view of the image.

An advantage of this embodiment is that a compact yet efficient arrangement for expanding the field-of-view may be provided.

Another advantage is that by splitting the image up in two separate halves of the full field-of-view, light in each of the two halves, may utilize the full angular bandwidth of the waveguide in each direction of propagation. By the present arrangement, a display optic device allowing for even larger vertical fields-of-view may be provided.

According to an embodiment, the first expander, the second expander, the third expander and the fourth expander each comprises a first expander grating, a second expander grating, and a third expander grating configured to expand the light independent of polarization of the light.

An advantage with this embodiment is that the respective expanders may operate, e.g. expand and guide, light of any polarization. When an in-coupler configured to couple light of different polarizations into the waveguide, polarization independent expanders are an efficient manner of guiding and expanding the light in the waveguide.

Alternatively, the first, second, third, and the fourth expanders may each comprises a combination of two stacks of three gratings each, the two stacks being optimized for two orthogonal polarizations. By arranging said two stacks of gratings on either sides of the waveguide the expanders may be compatible with the previously described in-coupler.

According to an embodiment, the display optic device further comprises an out-coupler arranged in the common region and at least partially in the waveguide, and configured to receive the light combined from the first expander set and the second expander set, and to output the light towards the eye, thereby displaying the image to the eye.

The light that was split by the in-coupler into two different directions, may be combined again into a full image at the out-coupler, wherein the full field-of-view is reconstructed and projected towards the eye.

According to an embodiment, the out-coupler comprises:

> a first out-coupler grating configured to couple light of the first polarization and the first range of angles of incidence of light out from the waveguide, and
> a second out-coupler grating configured to couple light of the second polarization and the second range of angles of incidence of light out from the waveguide.

According to an embodiment, the out-coupler further comprises:
a third out-coupler grating configured to couple light of the second polarization and the third range of angles of incidence of light out from the waveguide.

It should be realized that the out-coupler is typically configured in a similar manner as the in-coupler. Thus, the number of out-coupling gratings in the out-coupler may be equal to the number of gratings in the in-coupler. Moreover, the grating pitch and material of the out-coupler may be the same as that of the in-coupler. Further, the out-coupler may be arranged to have the same orientation as the in-coupler with respect to the gratings of the out-coupler and the in-coupler.

By way of example, the out-coupler may comprise a two-grating configuration wherein the first and second out-coupler gratings may be tuned for diffracting light of longer wavelengths of the visible spectrum, typically red color wavelengths.

By way of further example, the out-coupler may comprise a three-grating configuration wherein the first and second out-coupler gratings may be tuned to diffract light of shorter wavelengths of the visible spectrum, typically blue color wavelengths, and wherein the third out-coupler grating may be tuned to diffract light of longer wavelengths of the visible spectrum, typically red color wavelengths, however of the same polarization as the second out-coupler grating. In this manner, the out-coupler gratings may be tuned to provide a large field-of-view for their respective wavelengths. It should be understood that, although an out-coupler grating is tuned for diffracting light of a certain wavelength, the grating may still diffract light of also other wavelengths, at least within a certain wavelength range around the wavelength for which the grating is tuned.

An advantage is that a display optic device may be provided, wherein the image being in-coupled into the waveguide and guided through the waveguide may further be out-coupled and projected to the eye in full such that the full field-of-view is maintained in the projection. The present arrangement may provide a large field-of-view in both a horizontal and a vertical viewing angle projected towards the eye.

As previously mention in relation to the in-coupler, the third grating of the in-coupler may be configured to couple light of the first polarization, alternatively or additionally to light of the second polarization. In such a case, the third out-coupler grating may be configured to, alternatively or additionally, couple light of the first polarization and the third range of angles of incidence of light out from the waveguide.

According to an embodiment, the waveguide has a refractive index $n_2$ of 2 or lower, and preferably 1.52 or lower.

In conventional near-eye displays, high refractive index materials are employed in order to provide a large field-of-view. However, high refractive index materials suffer from the drawbacks of high density and weight. Further, the waveguide may require increased thickness.

An advantage with using a waveguide of a refractive index of 2 or lower is that the display optic device for a near-eye display with lower density and thus lower weight may be provided. By the present arrangement, a single waveguide-based display optic device for a near-eye display with large field-of-view for full color images may be provided at low refractive index and thus at low weight. Consequently, the arrangement may provide improvements in visual as well as wearable comfort, due to the weight and size.

According to an embodiment, each of the first grating, the second grating and the third grating, respectively, is a metagrating consisting of a periodic arrangement of sub-wavelength elements.

According to an embodiment, the sub-wavelength elements of the first grating, the second grating and the third grating comprise a material with a refractive index $n_3$ being larger than the refractive index $n_2$ of the waveguide.

It serves to mention that the sub-wavelength elements of the first, second and third gratings, respectively, may comprise different materials with different refractive indices. In such a case, each refractive index of the materials of the first, second, and third grating, respectively, may be higher than that of the host medium in which the sub-wavelength elements are arranged. By way of example, the host medium may be that of the waveguide. However, it is conceivable that also other materials are provided as the host medium.

In case the first, second and third gratings are arranged in different layers, it is conceivable that the different layer, and thus the different gratings, are provided with different host medium materials. However, for each of the gratings, the refractive index of the sub-wavelength element material may be higher than that of the respective host medium material.

It serves to mention that a higher contrast between refractive index of the sub-wavelength elements and host medium may provide better light coupling efficiency.

According to an embodiment, the periodic arrangement of sub-wavelength elements of the first grating has a first period $d_1$ with which the sub-wavelength elements are repeated,

the periodic arrangement of sub-wavelength elements of the second grating has a second period $d_2$ with which the sub-wavelength elements are repeated, and
the periodic arrangement of sub-wavelength elements of the third grating has a third period $d_3$ with which the sub-wavelength elements are repeated,
wherein $d_1 < d_2 < d_3$.

According to an embodiment, the first grating, the second grating and the third grating are arranged in different layers of the in-coupler, such that the light first reaches the first grating, that the light thereafter reaches the second grating and that lastly the light reaches the third grating.

In the present arrangement, the distance between the layers needs to be large in order to avoid interaction between the different layers. By way of example, the distance between the layers may be close to the thickness of the waveguide.

However, as an alternative the first grating, the second grating and the third grating may be arranged in a single common layer. By way of example, the periodic structure of the respective gratings may be superposed into a single layer, forming a complex of a plurality of periodic structures, that jointly may provide the function of the three respective gratings.

According to a second aspect there is provided a near-eye display comprising:

at least one display optic device according to the first aspect, and
a light source configured to project the light representing an image to be displayed to the eye, towards the in-coupler of the at least one display optic device, such that the light is coupled into the waveguide by the in-coupler.

The light source is configured to project the light representing an image to be displayed to the eye. The light source may be controlled by a control signal in order to provide the image to the displayed to the eye. The image may be a color image. By way of example, the light source may comprise one or more lasers or one or more light emitting diodes (LED). In order for the light source to be able to represent the image in full color, the light source may typically be configured to generate light of at least three wavelengths. The three wavelengths typically correspond to the colors red, green, and blue. Given as a non-limiting example, the light source may be configured to generate light at 625 nm, 540 nm, and 450 nm, representing the colors red, green, and blue, respectively.

According to an embodiment, the near-eye display is configured in the form of spectacles wearable by a user.

According to a third aspect there is provided a method of operation of a display optic device for a near-eye display, wherein the display optic device comprises a waveguide configured to guide the light, wherein the waveguide is a slab waveguide extending along an extension of the display optic device, and an in-coupler arranged at least partially in the waveguide, the method comprising:

receiving, at the in-coupler, light representing an image to be displayed to an eye;
coupling, by a first grating of the in-coupler, light of a first polarization and a first range of angles of incidence of light into the waveguide, wherein the first range comprises angles of incidence of light larger than a threshold angle;
coupling, by a second grating of the in-coupler, light of a second polarization and a second range of angles of incidence of light into the waveguide, wherein the second polarization is perpendicular to the first polarization and wherein the second range comprises angles of incidence around and including normal incidence such that the second range is complementary to the first range;
propagating the light in the waveguide in a first direction and a second direction, wherein the second direction is opposite to the first direction.

According to an embodiment the method further comprises outputting the light from the display optic device towards the eye.

According to an embodiment, the method further comprises:

receiving, by a first expander set of the waveguide, the light in the waveguide propagated in the first direction;

expanding, by a first expander of the first expander set, the light in a first expansion direction;

expanding, by a second expander of the first expander set, the light in a second expansion direction, the second expansion direction being perpendicular to the first expansion direction;

receiving, by a second expander set of the waveguide, the light in the waveguide propagated in the second direction;

expanding, by a third expander of the second expander set, the light in a third expansion direction;

expanding, by a fourth expander of the second expander set, the light in a fourth expansion direction; and

guiding, by the first expander set and the second expander set, their respective light opposed to one another, such that the respective light of the first expander set and the second expander set are combined.

According to an embodiment, the method further comprises:

receiving, at an out-coupler arranged at least partially in the waveguide, the light combined from the first expander set and the second expander set; and

output, by the out-coupler, the light towards the eye, thereby displaying the image to the eye.

Effects and features of the second and third aspects are largely analogous to those described above in connection with the first aspect. Embodiments mentioned in relation to the first aspect are largely compatible with the second and third aspects. It is further noted that the disclosure relates to all possible combinations of features unless explicitly stated otherwise.

Other objectives, features and advantages of the present disclosure will appear from the following detailed description, from the attached claims as well as from the drawings.

Brief descriptions of the drawings

The above, as well as additional objects, features and advantages of the present disclosure, will be better understood through the following illustrative and non-limiting detailed description, with reference to the appended drawings. In the drawings like reference numerals will be used for like elements unless stated otherwise.

Fig. 1A schematically illustrates a near-eye display.

Fig. 1B schematically illustrates an alternative configuration of the near-eye display.

Fig. 2A schematically illustrates a cross-sectional view of in-coupler.

Fig. 2B illustrates an alternative configuration of the in-coupler.

Fig. 3 schematically illustrates the light coupling into the waveguide by the respective gratings.

Fig. 4A illustrates the details of light diffraction by the in-coupler.

Fig. 4B schematically illustrates angles of light coupled from ambient air into the waveguide by the in-coupler.

Fig. 5 schematically illustrates the angular tiling in a single waveguide in-coupler with large field-of-view for the three different colors, blue, green, and red.

Fig. 6 schematically illustrates a cross-sectional view of an expander.

Fig. 7 illustrates the k-vector space diagram for a single color wavelength in relation to an expander.

Fig. 8 illustrates a schematic block diagram shortly summarizing the method of operation of a display optic device for a near-eye display.

Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

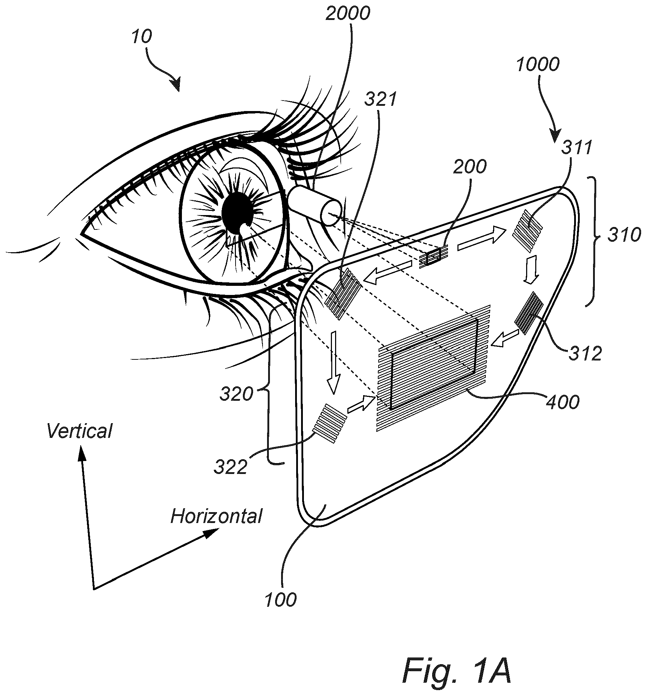

Fig. 1A schematically illustrates a near-eye display. The near-eye display may be a display for Extended Reality or Augmented Reality. In the present example, the near-eye display is configured in the form of spectacles wearable by a user.

The near-eye display comprises a display optic device 1000. The display optic device 1000 is configured to receive light representing an image to be displayed to an eye 10 of the user. The display optic device 1000 is further configured to guide the light in the display optic device 1000, and to output the light from the display optic device 1000 towards the eye 10.

In order to guide light, the display optic device 1000 comprises a waveguide 100 and more specifically a slab waveguide extending along an extension of the display optic device 1000. The waveguide 100 is configured to guide light being coupled into the waveguide 100.

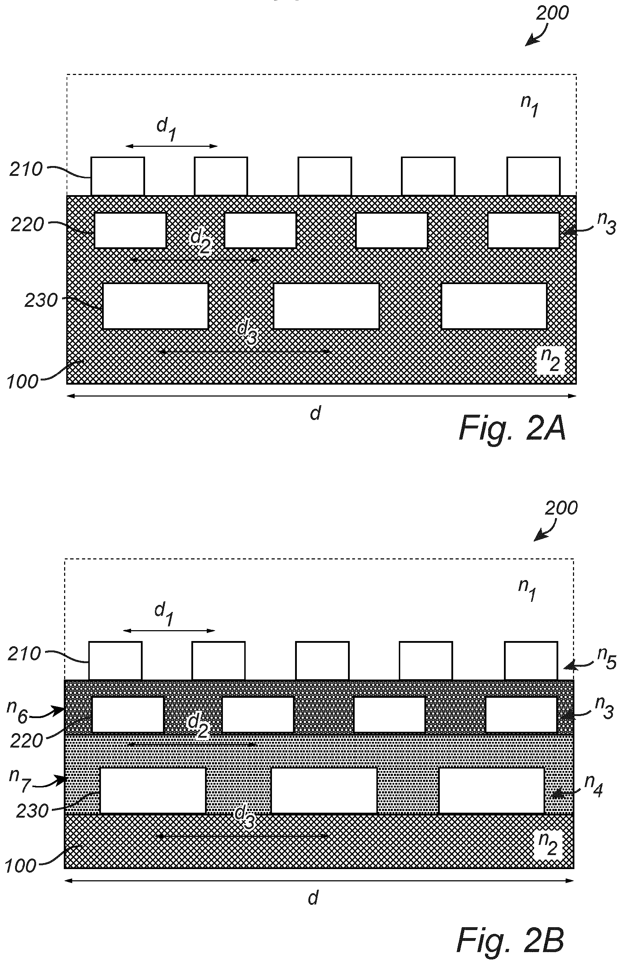

The display optic device 1000 further comprises an in-coupler 200. The in-coupler 200 comprises a diffraction grating structure, the details of which will be explained in relation to Fig. 2A and Fig. 2B. The grating structure is arranged at least partially in the waveguide 100. However, the grating structure of the in-coupler may alternatively be arranged on a top surface of the waveguide 100. The in-coupler 200 is configured to receive the light representing the image, and to couple the light into the waveguide 100.

The near-eye display further comprises a light source 2000. The light source 2000 is configured to project the light representing the image to be displayed to the eye 10, towards the in-coupler 200 of the display optic device 1000. As illustrated in Fig. 1A, the in-coupler 200 is arranged at an upper part of the display optic device 1000. However, it should be understood that the in-coupler 200 may alternatively be arranged at a lower part of the display optic device 1000.

As illustrated in Fig. 1A, the light from the light source 2000 representing the image may be coupled into the waveguide 100 by the in-coupler 200. Further, the in-coupler 200 is configured to couple the light into the waveguide 100, such that the light is propagated in the waveguide 100 in a first direction and a second direction, opposite to the first direction. In the present example, the first and second directions extend in the horizontal direction of the display optic device 1000, however, it should be realized that the first and second directions may alternatively extend in other directions, as for example in the vertical direction of the display optic device 1000. By splitting the image up in two separate halves of the full field-of-view, light in each of the two paths, may utilize the full angular bandwidth of the waveguide in each direction of propagation.

In order to redirect the light coupled into the waveguide 100 and to expand the light into a large field-of-view, the waveguide 100 comprises a first expander set 310 and a second expander set 320.

The first expander set 310 is arranged in the waveguide 100 so as to receive the light in the waveguide 100 propagated in the first direction from the in-coupler 200. The first expander set 310 comprises a first expander 311 and a second expander 312, out of which the light first reaches the first expander 311. At the first expander 311, the light may be expanded in a first expansion direction within the waveguide 100 by the first expander 311. In the present example, the first expansion direction may be the horizontal direction of the display optic device 1000. The light may also be redirected, as illustrated in Fig. 1A as being redirected from propagation in the horizontal direction to propagation in the vertical direction. This should however be understood only as example, and that other directions are equally conceivable.

The light propagating in the waveguide 100 from the first expander 311 is directed towards the second expander 312. At the second expander 312, the light may be expanded in a second expansion direction within the waveguide. In the present example, the second expansion direction may be the vertical direction of the display optic device 1000. The light may also be redirected, as illustrated in Fig. 1A as being redirected from propagation in the vertical direction to propagation in the horizontal direction.

Similarly, the second expander set 320 comprises a third expander 321 and a fourth expander 322. The third expander 321 is configured to expand the light in a third expansion direction within the waveguide 100, as for example in the horizontal direction of the display optic device 1000. The fourth expander 322 is configured to expand the light in a fourth expansion direction within the waveguide 100, as for example in the vertical direction of the display optic device 1000. The light may also be redirected in the waveguide 100 by the third 321 and fourth 322 expanders, similarly to the first 311 and second 312 expanders.

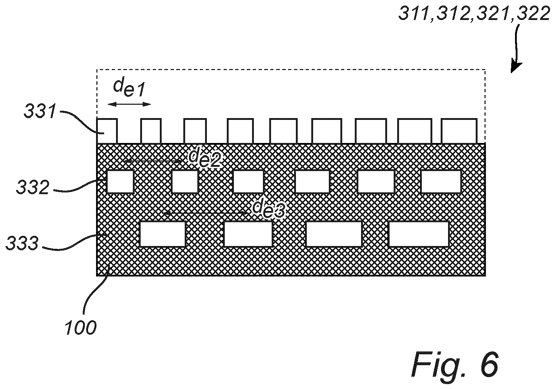

In the present example, the first expander 311, the second expander 312, the third expander 321 and the fourth expander 322 each comprises an expansion grating structure, the details of which will be explained in relation to Figs 6-7. The four expanders may be configured in a similar manner, however being provided with different orientations in the waveguide plane, with respect to the expansion grating structure.

The first expander set 310 and the second expander set 320 are symmetrically arranged in the waveguide 100 so as to guide the light in the two respective paths to reach a common region 110 in the waveguide 100. By the present arrangement, the light of the first expander set 310 and the second expander set 320 are recombined in the common region 110.

The display optic device 1000 further comprises an out-coupler 400. The out-coupler 400 is arranged in the common region 110 and at least partially in the waveguide 100. Similarly to the in-coupler, the grating structure of the out-coupler may alternatively be arranged on a top surface of the waveguide 100. The out-coupler 400 is configured to receive the light combined from the first expander set 310 and the second expander set 310, in the common region 110. The light is combined to form a complete image from the parts that were split up by the in-coupler. The complete image may subsequently be output towards the eye 10, thereby displaying the full image to the eye 10.

It serves to mention that the out-coupler 400 may be configured in the same manner as the in-coupler 200 and to have the same orientation in the waveguide plane, in order for the out-coupler 400 to operate similarly on the different parts of the light as the in-coupler 200.

The details of how the grating structures are configured will be described in the following.

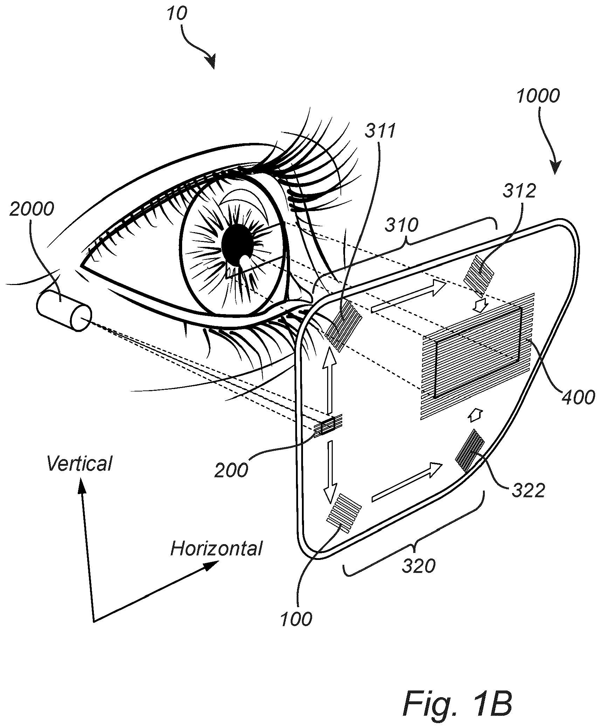

Fig. 1B illustrates an alternative configuration of the near-eye display wherein the in-coupler 200 is arranged at a side part of the display optic device 1000. This configuration shares several features of the configuration described in relation to Fig. 1A, the details of which are not repeated here. However, it serves to mention that in the configuration of Fig. 1B, dual mode splitting of the vertical field-of-view may be provided. Consequently, a very high vertical field-of-view but a lower horizontal field-of-view may be provided, as compared to the configuration described in relation to Fig. 1A.

Fig. 2A schematically illustrates a cross-sectional view of in-coupler 200. More specifically Fig. 2A illustrates a unit cell of the combined diffraction gratings in the in-coupler 200. As previously mentioned, the in-coupler 200 is at least partially arranged in the waveguide 100.

The in-coupler 200 may be in a two grating configuration or a three grating configuration. In the present example, the in-coupler 200 is in a three grating configuration. Thus, the in-coupler 200 comprises a first grating 210, a second grating 220 and a third grating 230.

In the present example, the first grating 210, the second grating 220 and the third grating 230 are arranged in different layers of the in-coupler 200. The incident light will thus first reach the first grating 210, thereafter the second grating 220 and lastly the third grating 230. However, it is conceivable that the gratings 210, 220, 230 may alternatively be integrated into fewer layers, and even into a single layer.

Each of the first grating 210, the second grating 220 and the third grating 230, respectively, is an optical diffraction grating with a periodic structure of a grating material configured to diffract light into one or more propagation directions. By selection of the grating pitch or grating period of the periodic structure, an angle under which the light exits the grating and propagates into the waveguide 100 may be tuned. By way of example, each of the first grating 210, the second grating 220 and the third grating 230, respectively, may be a metagrating consisting of a periodic arrangement of sub-wavelength elements.

The waveguide has a refractive index of $n_2$. The refractive index $n_2$ may preferably be 2 or lower, and as for example 1.52 being that of BK7 glass. The low refractive index provides for a light weight display optic device.

In the example illustrated in Fig. 2A, the sub-wavelength elements of the first grating 210, the second grating 220 and the third grating 230 all comprise the same material having a refractive index of $n_3$. The refractive index $n_3$ is larger than the refractive index $n_2$ of the waveguide 100.

As illustrated in Fig. 2A, the second 220 and third 230 gratings are arranged in the waveguide 100, or in the same material as that of the waveguide 100. In other words, the sub-wavelength elements with refractive index of $n_3$ are arranged in a host material of refractive index $n_2$. The first grating 210, however, it arranged on top of the waveguide 100 material in a host material of refractive index $n_1$. By way of example, this host material may be ambient air. Thus, the relationship between the different refractive indices may be $n_3 > n_2 > n_1$. A higher contrast between refractive index of the sub-wavelength elements and host medium may provide better light coupling efficiency.

As illustrated in Fig. 2A, the periodic arrangement of sub-wavelength elements of the first grating 210 has a first period $d_1$ with which the sub-wavelength elements are repeated. Further, the periodic arrangement of sub-wavelength elements of the second grating 220 has a second period $d_2$ with which the sub-wavelength elements are repeated. Moreover, the periodic arrangement of sub-wavelength elements of the third grating 230 has a third period $d_3$ with which the sub-wavelength elements are repeated. As can be seen in Fig. 2A, the relationship between the different periods is $d_1 < d_2 < d_3$.

By way of example, $SiO_2$ may be used as the material of the waveguide. By way of further example, $TiO_x$ may be used as the material for the elements of the diffraction gratings. The distance between the elements of the gratings may be filled with $SiO_2$, and it is here assumed that the thicknesses of these separating layers are below the shortest wavelength.

It serves to mention that the fabrication tolerances of the line widths and height of the gratings may be above 10 nm. Thus, the in-coupler may be relatively insensitive to lateral shifts, and the mutual positioning of the elements of the diffraction gratings in relation to one another inside the pitch may not significantly affect the performance.

Further, the tolerance of the rotational misalignment of the gratings may be up to 10°. Put differently, the orientation of the grating elements within the respective grating layers may be angled relative to the other gratings with up to the tolerance of 10°. By way of example, the tolerance allows a maximal deviation of the first grating to be +5° with respect to the orientation of the second grating, and a maximum deviation of the third grating to be -5° with respect to the orientation of the second grating. Thus, the orientations of the three gratings fall within the tolerance of 10°. Based on fabrication tolerance it may be concluded that the full system may be fabricated both in nanoimprint lithography (NIL) and electron beam lithography (EBL).

It serves to mention that the gratings may alternatively be made of different materials and may be arranged in different host mediums. Fig. 2B illustrates an alternative configuration of the in-coupler 200. In the present example, the first 210, second 220, and third 230 gratings may comprise elements of refractive indices $n_5$, $n_3$, and $n_4$, respectively. Further, the first 210, second 220, and third 230 gratings may comprise host materials of refractive indices $n_1$, $n_6$, and $n_7$, respectively. Additionally, the waveguide 100 may have a refractive index of $n_2$. Typically, the refractive indices of the elements are larger than that of the respective host medium. Moreover, the refractive indices of the host mediums may be smaller than, or about the same as that of the waveguide.

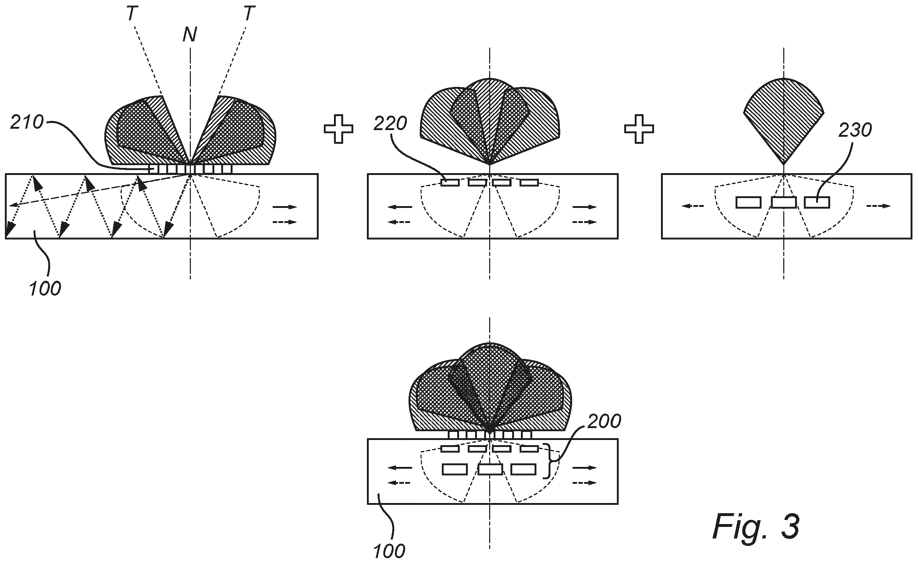

Fig. 3 schematically illustrates the light coupling into the waveguide 100 by the respective gratings 210, 220, 230.

Light coupling by the first grating 210 is illustrated on the left-hand side of Fig. 3. The first grating 210 of the in-coupler 200 may be configured to couple incident light of a first polarization, for example TE polarized light, into the waveguide 100. Further, the first grating 210 may be configured to couple incident light of a first range of angles of incidence of light into the waveguide 100, provided that the light is also of the first polarization. The first range comprises large angles of incidence, i.e. angles of incidence larger than a threshold angle (T). The threshold angle is illustrated by the dashed line. It should be realized that the first grating 210 may be transparent for TM polarized light for all colors, as well as for the full angular range, in order for the TM polarized light to reach to the second 220 and third 230 gratings.

The first grating 210 may be tuned for blue color wavelengths. Put differently, the grating period may be calculated such that blue color wavelengths of the desired angles of incidence are diffracted to be coupled into the waveguide 100 within the total internal reflection (TIR) and grazing incidence angle limits. It should be understood that the first grating 210 may still diffract light of also other wavelengths, such as red and green color wavelengths, however, the other wavelengths may be diffracted at different diffraction angles.

Light coupling by the second grating 220 is illustrated on the top center of Fig. 3. The second grating 220 of the in-coupler 200 may be configured to couple light of a second polarization, perpendicular to the first polarization, for example TM polarized light, into the waveguide 100. Further, the second grating 220 may be configured to couple incident light of a second range of angles of incidence of light into the waveguide 100, provided that the light is also of the second polarization. The second range comprises small angles of incidence, i.e. angles of incidence around and including normal incidence (N). The second range may be complementary to the first range, such that some angles of incidence are coupled into the waveguide 100 only by the first grating 210 and some other angles of incidence are coupled into the waveguide 100 only by the second grating 220. However, the first range and the second range of angles of incidence typically partially overlap, so that the combination of the first range and the second range forms a continuous range of angles of incidence, without forming any angular gap therebetween.

The second grating 220 may be tuned for blue color wavelengths, thus the same wavelength range as the first grating 210. However, as mentioned above, also other wavelengths such as red and green color wavelengths, may be diffracted by the second grating 220, but at different diffraction angles.

Light coupling by the third grating 230 is illustrated on the right-hand side of Fig. 3. The third grating 230 of the in-coupler 200 may be configured to couple light of the second polarization, thus the same polarization as for the second grating 220, into the waveguide 100. Further, the third grating 230 may be configured to couple incident light of a third range of angles of incidence of light into the waveguide 100, provided that the light is also of the second polarization. The third range comprises angles of incidence around and including normal incidence (N).

The third grating 230 may be configured to couple light at a different wavelength range as compared to the second grating 220. More specifically, the third grating 230 may be tuned for red color wavelengths.

As illustrated in Fig. 3 for all three gratings 210, 220, 230, the light is coupled into the waveguide 100 such that the light is propagated in the waveguide 100 in a first direction and a second direction, the second direction being opposite to the first direction. By way of example, the incident light may be split with respect to the normal (N) of the waveguide 100 into the two directions. For example, light incident onto the in-coupler from one side of the normal, e.g. having a positive angle of incidence may be diffracted and coupled into the waveguide 100 in the first direction, whereas light incident onto the in-coupler from another, opposite side of the normal, e.g. having a negative angle of incidence may be diffracted and coupled into the waveguide 100 in the second direction. Thus, the in-coupling gratings are designed to engage dual diffraction modes. The present arrangement may double the field-of-view since each half-image may use the full angular bandwidth of the waveguide 100 in each direction of propagation. Moreover, a full three grating configuration may increase the field-of-view even further.

At the bottom of Fig. 3, the combination of the three gratings 210, 220, 230 and the combined light coupling into the waveguide 100 is schematically illustrated.

It serves to mention that the out-coupler 400 as illustrated in Fig. 1 may be configured in the same manner as the in-coupler. Thus, a description of the out-coupler would be analogous to that of the in-coupler, for which reason a separate description for the out-coupler is not necessary, and is therefore not provided here.

In order to calculate the periods of the three gratings respectively, it is assumed that the largest angular span that may be coupled into the waveguide 100 propagates in the waveguide between the total internal reflection (TIR) and the grazing angular limits. An example of the calculation will be described in the following.

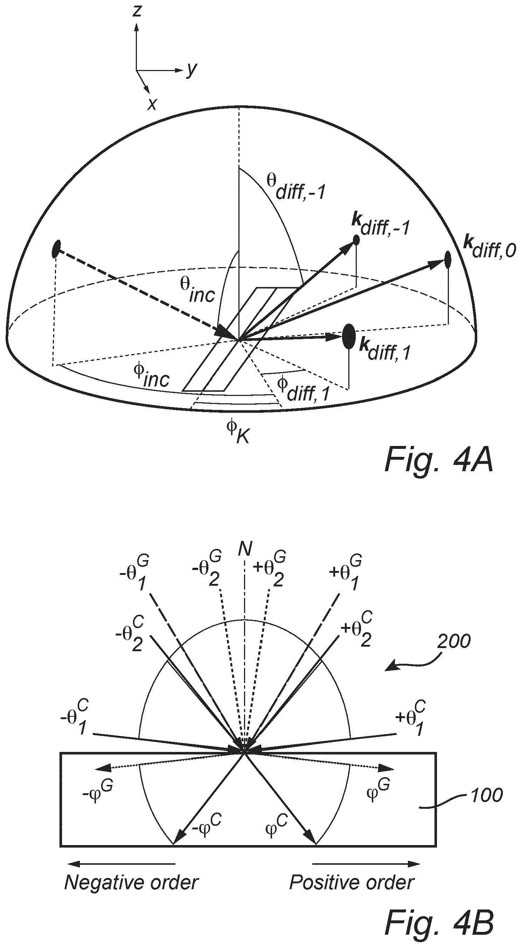

Fig. 4A illustrates the details of light diffraction by the in-coupler. In the present example, an in-coupler based on a metagrating is considered. The considered metagrating consists of a periodic arrangement of high refractive index sub-wavelength elements. As previously described in relation to Fig. 2A and Fig. 3, the metagrating comprises three different diffraction gratings having different periods calculated for the respective wavelengths and may have different size and material of the elements. A schematic cross-sectional view of a waveguide with a metagrating in-coupler is illustrated in Fig. 2A. To calculate the periods of the gratings, it is assumed that the largest angular span that can be coupled into the waveguide is between the total internal reflection (TIR) and the grazing angular limits. Assuming now that a linearly polarized plane wave is incident on the in-coupler gratings from the top. To get high efficiency, the system should be tuned considering the polarization of the incident wave. In-coupling gratings are designed to engage dual diffraction modes at each position for a large field-of-view.

Consider a general case for a reflective grating when the light has an azimuth component in addition to a polar component (conical incidence). Assume that the diffraction grating has the lines at an angle $\phi_K$ to the vector k direction, $\theta_{inc}$ is an incident polar angle; $\theta_{diff}$ is the diffracted polar angle for order M>0; $\Phi_{inc}$ and $\Phi_{diff}$ are incident and diffracted azimuth angles; $n_1$ is the refractive index of the medium outside the waveguide, $n_2$ is the refractive index of the waveguide material. Then, the system of conical mounting equations for in-coupling diffraction grating takes the form:

$$n_2 \begin{pmatrix} sin\ \theta_{diff}\ cos\ \Phi_{diff} \\ sin\ \theta_{diff}\ sin\ \Phi_{diff} \end{pmatrix} + n_1 \begin{pmatrix} sin\ \theta_{inc}\ cos\ \Phi_{inc} \\ sin\ \theta_{inc}\ sin\ \Phi_{inc} \end{pmatrix} = \frac{M\lambda}{d_{inc}} \begin{pmatrix} sin\ \Phi_K \\ cos\ \Phi_K \end{pmatrix} \qquad (1)$$

For the in-coupler analysis, the diffraction grating orientation angle is $\Phi_K$ = 90°. Here $d_{inc}$ is the period of in-coupling diffraction grating. It should be noted that the diffracted polar angles should be kept above the TIR limit angle and below the grazing limit.

To determine the horizontal field-of-view it is assumed that $\Phi_{inc}$ = 0; $\Phi_{diff}$ = $\pi$. The total maximum horizontal field-of-view for the symmetrical dual-mode system can be determined as:

$$\Delta \Theta^H = 2\ sin^{-1} \left( \frac{n_2 - 1}{2} \right), \qquad (2)$$

Assuming that that $\theta_{diff}^G$ is the maximum grazing incidence inside the waveguide $\theta_{diff}^G = \varphi^G$ =75°-80°, the vertical field-of-view can be written as:

$$\Delta \Theta^V = 2sin^{-1} \left( \frac{-n_2\ sin\ \theta_{diff}^G\ sin\ \Phi_{diff}^V + \frac{M\lambda}{d_{inc}}\ cos\ \phi_K}{n_1\ sin\ \Phi_{inc}^V} \right), \qquad (3)$$

where

$$\Phi_{diff}^V = \pm cos^{-1} \left( \frac{\frac{M\lambda}{d_{inc}}\ sin\ \phi_K - n_1\ sin\ \theta_{inc}^G\ cos\ \Phi_{inc}^V}{n_2\ sin\ \theta_{diff}^G} \right).$$

To determine the vertical field-of-view it is assumed that $\Phi_{inc}^V = \frac{\pi}{2}$.

Here determines the amount of overlap between the modes and determines a pitch of the in-coupling grating $d_{inc}$. By increasing the overlap angle, the vertical field-of-view is increased and correspondingly the horizontal field-of-view is decreased. To select the overlap angle, the aspect ratio for the display needs to be analyzed.

Fig. 4B schematically illustrates angles of light coupled from ambient air into the waveguide 100 by the in-coupler 200. Angles denoted by letter θ are located in the ambient air. Angles denoted by letter φ are located in the waveguide 100, thus diffracted light. C denotes a critical angle, either in air or in the waveguide 100. G denotes a grazing angle.

By splitting the total field-of-view between two polarizations the same angular bandwidth of the waveguide 100 may be used for both parts of the field-of-view.

The first grating (see Fig. 2A) is tuned for blue color wavelengths and one single polarization, TE polarized light in the present example, in order to couple large angles of incidence into the waveguide 100. Here it is assumed that the large angles of incidence correspond to the angles with the absolute values that are above $|\theta_2^C|$. In this case the small angles of incidence are the angles with the absolute values below $|\theta_2^C|$. By way of example, ultra-high field-of-view may correspond to a field-of-view larger than the field-of-view defined by equation 2 above.

TE polarized light incident in the angular ranges $[-\theta_1^C; -\theta_1^G]$ and $[\theta_1^G; \theta_1^C]$ may be diffracted by the first grating into the waveguide in the angular ranges $[-\varphi^G; -\varphi^C]$ and $[\varphi^C; \varphi^G]$. Light in the waveguide 100 on the left-hand side of the normal in Fig. 4B may propagate toward the left in the waveguide 100 while light in the waveguide 100 on the right-hand side of the normal may propagate toward the right.

TE polarized light incident in the angular range between $[-\theta_1^G; \theta_1^G]$ is transmitted through the first grating. It corresponds to the 0 transmitted order $T_0$. This portion of light should not be diffracted by the second or third gratings, since the second and third gratings are configured for light of a different polarization, TM polarized light in the present example. Thus, this light will not be in-coupled into the waveguide 100. It is also assumed that the first grating may be transparent for TM polarized light for all colors, i.e. all of the three colors, as well as for the full angular range $[-\theta_1^C; \theta_1^C]$.

TM polarized light of blue color wavelengths incident in the angular ranges $[-\theta_2^C; -\theta_2^G]$ and $[\theta_2^G; \theta_2^C]$ may be diffracted by the second grating into the waveguide 100 in the angular ranges $[-\varphi^G; -\varphi^C]$ and $[\varphi^C; \varphi^G]$. It is assumed that the grazing rays $\pm\theta_1^G$ are in the vicinity of the normal. As in the case of the first grating, light of positive angles of incidence will propagate towards the right in the waveguide 100 while light of negative angles of incidence will propagate towards the left in waveguide 100.

The third grating, which may also be configured for diffracting TM polarized light, is different from the second grating in that it has a different pitch size. However, the geometrical structure may be of the same shape as the one of the first and second gratings. The third grating may be configured to in-couple small angles of incidence, i.e. around and including normal incidence, and tuned for light of red color wavelengths.

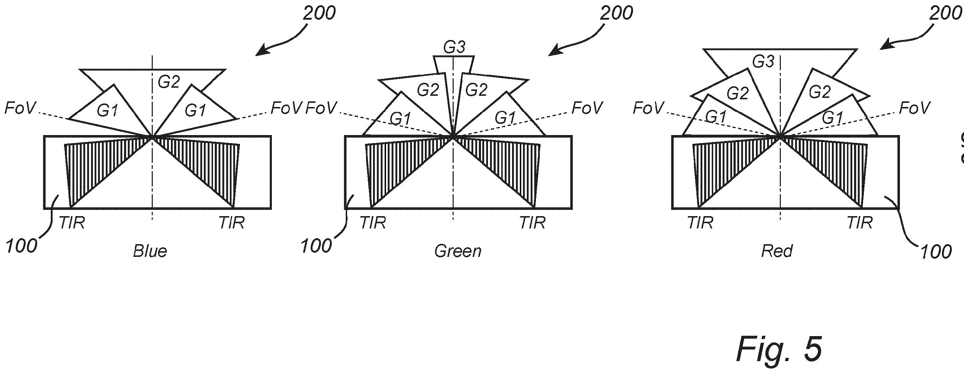

Fig. 5 schematically illustrates the angular tiling in a single waveguide 100 in-coupler 200 with ultra-high field-of-view for three different colors, blue, green, and red. For each of the colors it is denoted which range of angles of incidence is coupled by the first (G1), second, (G2) and third (G3) grating, respectively.

In the present three grating configuration, the grating pitch sizes of the first (G1 with the pitch $d_1$) and second (G2 with the pitch $d_2$) gratings may be tuned for diffracting light of blue color wavelengths to get high diffraction efficiency of the $\pm$1st diffraction orders in the angular range covering full high field-of-view. Thus, the first grating may couple large angles of incidence and the second grating may couple small angles of incidence into the waveguide.

Similar angular distributions with shifts toward the larger angles may correspond to the angle of incidence of the green and red color wavelengths being diffracted by the first and second gratings.

Light of smaller remaining angles of incidence may be transmitted through the second grating with high efficiency. This transmitted light may be coupled into the waveguide by the third grating (G3 with the pitch $d_3$) which may be placed on the bottom of the metagrating stack. The grating pitch size of the third grating may be tuned for diffraction of red color wavelengths to get high diffraction efficiency of the $\pm$1st diffraction orders in the angular range covering small angles of incidence. Similarly to the first and second gratings, light of positive angles of incidence diffracted by the third grating may propagate toward the right while light of negative angles of incidence may propagate toward the left in the waveguide. It should be noted that for the green color diffraction by the third grating a large angular overlap of the $\pm$1st diffraction orders is observed. It means that the positive diffraction order may correspond to positive and some range of negative angles of incidence. The negative diffraction order may correspond to negative and some positive angles of incidence. Finally, the range of small angles have response for both diffraction orders (angular overlapping of the characteristics). This should be taken into account when selecting the grating pitches, to prevent the undesirable deterioration of the image quality. To avoid gaps or black bands for some color wavelengths, grating pitch of the three gratings may be tuned to provide some angular overlap.

Using the diffraction grating equation (1) for the in-coupling grating orientation angle $\phi_K = 90°$, the equations for the periods of the diffraction gratings can be expressed as:

$$d_1 = M_1 \frac{\lambda_{\text{blue}}}{n_2 \sin \varphi^G + n_1 \sin \Theta_2^G} \tag{4}$$

$$d_2 = M_2 \frac{\lambda_{\text{blue}}}{n_2 \sin \varphi^G + n_1 \sin \Theta_2^G} \tag{5}$$

$$d_3 = M_3 \frac{\lambda_{red}}{\text{n}_2 \sin \varphi^G + \text{n}_1 \sin \Theta_3^G} \qquad (6)$$

$M_{1-3}$ correspond to the diffraction orders of the first, second and third gratings, respectively. $\Phi_{WG1}^G$ and $\Phi_{WG2}^G$ may be selected to be approximately equal to 75°-80°. To provide a proper angular tiling, the angles should be $\theta_2^C \approx \theta_1^G$ and $-\theta_2^C \approx -\theta_1^G$, assuming that $\sin \varphi_{1,2,3}^C = \frac{1}{n_2}$.

The equations may be used to calculate the field-of-view of the metagrating in-coupler 200. In Table 1, some parameters and calculated values are listed for three gratings at three different wavelengths, namely, 450 nm (blue), 540 nm (green) and 625 nm (red). Further, the values are based on the waveguide material being BK7 glass, with a refractive index of $n_2 = 1.52$.

Table 1: Parameters of in-coupler gratings

| | $\lambda$ = 450 nm | $\lambda$ = 540 nm | $\lambda$ = 625nm |
|---|---|---|---|
| G1 (M$_1$=1) | $d_1$ = 260 nm | | |
| $\Theta_1^G$ | 13.1° | 35.3° | 65.3° |
| $\varphi^G$ | 80° | 80° | 80° |
| $\Theta_1^C$ | 47° | >90° | >90° |
| G2 (M$_2$=1) | $d_2$ = 325 nm | | |
| $\Theta_?^G$ | -6.8° | 9.4° | 25.4° |
| $\Theta_2^C$ | 22.5° | 41.25° | 67° |
| G3 (M$_3$=1) | $d_3$ = 433 nm | | |
| $\Theta_3^G$ | | -14.2° | -30 |
| $\Theta_3^C$ | | 14.3° | 26.1° |

In order to avoid gaps or black bands for some color wavelengths the horizontal field-of-view of the full system should be equal to 2×47°=94°, corresponding to $2 \times \Theta_1^C$ for the blue color wavelength. Taking into account angular overlapping for the three in-coupled color wavelengths the vertical field-of-view may be equal to 45°. Such a system provides a large field-of-view for all the colors using a single waveguide 100. However, if the refractive index of the waveguide 100 would be increased, a full 180 degrees field-of-view may be provided for full system.

The general topology of the metagrating unit cell was previously described in relation to Fig. 2A. To estimate the efficiency of the full system, the unit cell may be considered comprising five sub-wavelength elements of the first grating grating, four elements of the second grating and three elements of the third grating. As a result, the period of the metagrating is equal to d = 5d$_1$ = 4d$_2$ = 3d$_3$. For estimations presented in Table 1, a total pitch of the metagrating unit cell may be equal to d=1.3 μm for the in-coupler 200. In the present example, the cross-sectional view of metagrating unit cell corresponds to high refractive index elements n$_3$ on the top of a homogeneous dielectric plate with refractive index n$_2$ (n$_3$ > n$_2$). However, it should be understood that the elements of the gratings may comprise different materials. The materials and size of the constitutive parts of the grating elements should be selected such that the in-coupling efficiency is high.

Fig. 6 schematically illustrates a cross-sectional view of an expander 311, 312, 321, 322. The expander may be any one of the first 311, the second 312, the third 321 or the fourth 322 expander.

The expander comprises a first expander grating 331, a second expander grating 332, and a third expander grating 333. Each of the expander gratings is configured to expand the light propagating in the waveguide 100.

In the present example, the first expander grating 331, the second expander grating 332 and the third expander grating 333 are arranged in different layers of the expander.

Each of the first 331, second 332, and third 333 expander gratings, respectively, is an optical diffraction grating with a periodic structure of a grating material configured to diffract light, the properties of which is determined by the grating pitch or grating period of the periodic structure. As illustrated in Fig. 6, the periodic arrangement of sub-wavelength elements of the first expander grating 331 has a first period $d_{e1}$ with which the sub-wavelength elements are repeated. Further, the periodic arrangement of sub-wavelength elements of the second expander grating 332 has a second period $d_{e2}$ with which the sub-wavelength elements are repeated. Moreover, the periodic arrangement of sub-wavelength elements of the third expander grating 333 has a third period $d_{e3}$ with which the sub-wavelength elements are repeated. As can be seen in Fig. 6, the relationship between the different periods is $d_{e1} < d_{e2} < d_{e3}$.

As illustrated in Fig. 6, for each of the respective expander gratings, the grating duty cycle, i.e. the relation between the width of the sub-wavelength elements and that of the host material, may be varying across the expander grating. The arrangement may be referred to as duty cycle modulation. By the present arrangement, the efficiency of the expander 311, 312, 321, 322, may gradually increase in the propagation direction. In this manner a uniform image may be created and projected towards the eye.

An example of the calculation of the periods of the three expander gratings will be described in the following.

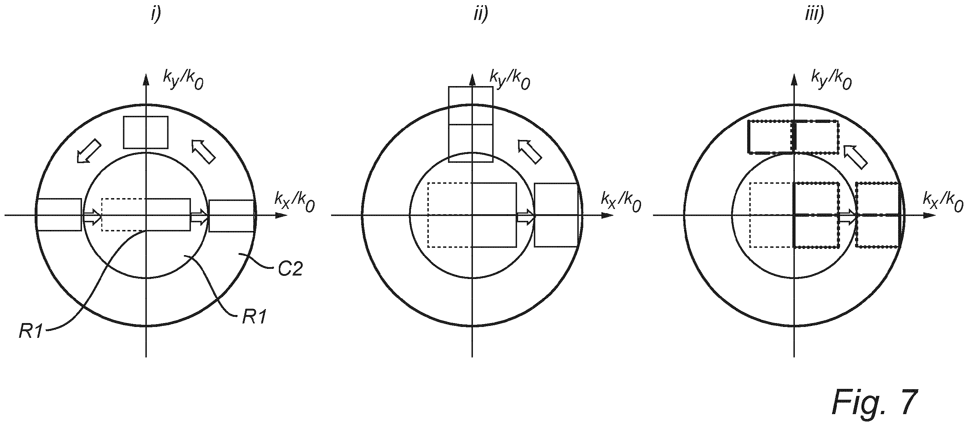

Fig. 7 illustrates the k-vector space diagram for a single color wavelength in relation to an expander 311, 312, 321, 322 of the expander sets, 310, 320, compatible with the dual-mode in-coupler 200.

In a spherical coordinate system, a wave vector k for the light in the waveguide may be written as:

$$k = (k_x, k_y, k_z) = 2\pi n\lambda(\sin\theta\cos\Phi, \sin\theta\sin\Phi, \cos\theta)$$

where n is the refractive index of the corresponding medium, $\lambda$ is the light wavelength, $\theta$ is the polar angle, and $\Phi$ is the azimuthal angle. It is assumed that polar angles may be changed from 0° to 90° and that azimuthal angles may be changed from 0° to 360°, respectively. If plotting all possible wave vectors in the XY plane in air, as shown in Fig. 7, the wave vectors could fill up a central circle C1. The radius of this circle is equal to $\frac{2\pi}{\lambda}n_1$. For the waveguide medium the domain of allowable wave vectors corresponds to a ring C2 with polar angles changing between the critical angle $\Theta^C$ and the grazing angle $\Theta^G$. The outer radius of the ring C2 is equal to $\frac{2\pi}{\lambda}n_2$. The rectangle in the center of circle C1 is a finite range of wave vectors bound by a rectangular field-of-view. To find a connection between polar and azimuthal angles in air and in a waveguide, diffraction grating equations (1) is used, describing diffraction of the light in-coupled into the waveguide. The area of k-domain of the field-of-view is well conserved regardless of the medium, wavelength, grating period and diffraction order. The field-of-view must be containable by both the circle C1 and the ring C2. In Fig. 7 the situation for a dual-mode case with a symmetric in-coupling configuration and splitting of the field-of-view after entering into the waveguide is illustrated. As the TIR angular range does not support an enlarged field-of-view, part of the field-of-view is coupled to the right and part of the field-of-view is coupled to the left. Thus, opposite sides of the field-of-view propagate in opposite directions. If such TIR fields are subsequently recombined with a single out-coupler, the original field-of-view may be reconstructed after. The diagram of Fig. 7 illustrates the in-coupling process only for the right half of the image. The in-coupled light may be redirected by 90° redirection elements, and out-coupled by the out-coupler.

As previously mentioned, the aspect ratio of the display will determine the parameters of the vertical field-of-view. It means that for increasing the horizontal field-of-view, also the vertical field-of-view need to be increased which may be limited by the TIR angular range after image redirection, see Fig. 7 ii. To avoid limitations of the vertical field-of-view, the top and bottom parts on each side of the optical axis may be split, instead of tuning the grating in TIR conical mounting to act symmetrically around the optical axis. Referring now to Fig. 7 iii, it is assumed that the top and bottom parts corresponding to the azimuth angles with opposite signs will be deviated by the different gratings: one will deviate only the light with positive azimuth angles (above 0°), another will deviate only the light with negative azimuth angles (below 0°). Azimuth angles $\pm|\Phi_m|$ correspond to the corners of the area bounded by a rectangular field-of-view. Thus, for the single-color case, two gratings may act as beam deviators for the top and bottom parts of corresponding half of the display. These two grating may also expand the image in one direction.

The display optic device may be configured to enable the light emitted by the top part of the display to be diffracted only by one particular grating of the expanders, either the top or bottom one, and to enable the light emitted by the bottom part of the display to be diffracted by the remaining expander grating. This may be provided by proper tuning of the gratings. For this purpose, nonsymmetrical topology of the reflective grating may be used for nonsymmetrical optical power distribution between diffraction orders ($R_j \neq R_{-j....}$, where j is the number of diffraction order, and R is the reflectivity of the gratings) leading to improved grating efficiency for the desired diffraction order.

In the following, the pitches of the expander for a one waveguide full color system will be calculated. To determine the desired grating periods of the expander, the equation for a diffraction grating in conical mounting may be used. The grating equations for the expander diffraction gratings in a general case may be written as:

$$n_2 \begin{pmatrix} \sin\theta_{diff}\cos\Phi_{diff} \\ \sin\theta_{diff}\sin\Phi_{diff} \end{pmatrix} + n_2 \begin{pmatrix} \sin\theta_{epe}\cos\Phi_{epe} \\ \sin\theta_{epe}\sin\Phi_{epe} \end{pmatrix} = \frac{N\lambda}{d_{epe}} \begin{pmatrix} \sin\phi_{epe} \\ \cos\phi_{epe} \end{pmatrix} \quad (7)$$

Here $\theta_{epe}$ is the polar angle diffracted by the expander grating for diffraction order $N$ of expander grating; $\Phi_{epe}$ is the azimuth angle diffracted by the expander grating, $d_{epe}$ is the period of expander grating, and $\phi_{epe}$ is the expander grating orientation angle.

To tune the pitches for the gratings with the split of the top and bottom parts on each side of the optical axis, the formulas for minimum and maximum pitches of the gratings deviating top and bottom parts of the corresponding half of the field-of-view may be derived. Assume that the point of the upper part of the field-of-view with $\theta_{diff}$ corresponding to TIR and $\Phi_{diff} = 0$ will be transformed to $\Phi_{epe} = \pi/2$ and $\theta_{epe}$ corresponding to TIR. Then the maximum pitch may be written as:

$$d_{epe1,max} = N_1 \lambda \cos\phi_{epe1} \quad (8a)$$

where $\phi_{epe1} = 45°$. The minimum value of the pitch $d_{epe1}$ can be obtained assuming that the point with $\Phi_{diff}$ corresponding to grazing angle and $\Phi_{diff} = -\Phi_m$ will be transformed to $\Phi_{epe} = \pi/2 + \Phi_m$, where $\Phi_m$ will be determined based on the limit of vertical field-of-view, and $\theta_{epe}$ corresponding to the grazing incidence angle:

$$d_{epe1,min} = N_1 \frac{\lambda\cos\phi_{epe1}}{n_2\sin\varphi^G(\cos\Phi_m - \sin\Phi_m)} \quad (8b)$$

For the second grating deviating the bottom part of the field-of-view two different formulas may be used for determination of the pitch size. For the first formula it is assumed that the point with $\theta_{diff}$ corresponding to the TIR angle inside the waveguide and $\Phi_{diff} = 0$ will be transformed to $\Phi_{epe} = \pi/2 - \Phi_m$ and $\theta_{epe}$ corresponding to grazing angle.

$$d_{epe2,max} = N_2 \frac{\lambda\cos\phi_{epe2}}{(1+n_2\sin\varphi^G\sin\Phi_m)} \quad (9a)$$

where $\phi_{epe2} = 45°$. For the second case it is assumed that the point with $\theta_{diff}$ corresponding to grazing incidence angle inside the waveguide and $\Phi_{diff} = \Phi_m$ will be transformed to $\Phi_{epe} = \pi/2$ and $\phi_{epe}$ corresponding to TIR angle.

$$d_{epe2,min} = N_2 \frac{\lambda\sin\phi_{epe2}}{n_2\sin\varphi^G\cos\Phi_m} \quad (9b)$$

Here $N_{1,2}$ are diffraction orders for the expander gratings.

Here it may be realized that two expander gratings have the same orientation angles, $\Phi_{epe1,epe2} = 45°$. Using a two-layer reflective expander metagrating for one wavelength, the in-coupled image with high vertical field-of-view and ordinary horizontal field-of-view for one single color may be rotated.

For all three colors the following procedure for tuning may be performed for few-layer metagrating:

The pitch sizes of the first ($d_{e1}$) and second ($d_{e2}$) expander gratings should be tuned for the blue color wavelengths to get desired diffraction efficiency of the 1st diffraction orders in the angular range between TIR and grazing angle. It means that the first expander grating in the stack will deviate a top part of the half of the field-of-view and second expander grating will deviate a bottom part of this half of the field-of-view for blue color. Tuning for the red color wavelengths demonstrates that the grating with the pitch which is close to the pitch of the first expander grating will also deviate a bottom part for the half of the field-of-view at red color wavelengths. It means that in case $d_{epe1}(\lambda_{blue}) = d_{epe2}(\lambda_{red})$ the total number of expander gratings in the expander grating stack may be decreased, to cover the full color range. Finally, the stack of three expander gratings with the pitches $d_{e1}$, $d_{e2}$ and $d_{e3}$ may be able to rotate the full-color image. As in a case of the in-coupler, by combining just three gratings tuned for blue and red colors, also the intermediate green color may be covered: $d_{e1} = d_{epe1}(\lambda_{blue})$, $d_{e2} = d_{epe2}(\lambda_{blue})$, $d_{e3} = d_{epe1}(\lambda_{red})$, (see eqs. 8-9).

If this stack of the expander gratings are tuned to get desired efficiency of the 1st reflected order only for one incident polarization (TM, for example), the metagrating may be able to cover only low angles of incidence corresponding to this particular polarization. However, the expander should reflect also the orthogonal polarization. For a case of high angle of incidence, a second stack needs to be used configured with the same pitches of the gratings but optimized for the second polarization (TE, for example), to reflect the orthogonal polarization. In other words, such an expander may comprise two stacks of expander gratings, thus one for each of the two orthogonal polarizations, and with three expander gratings each. By arranging said two stacks of gratings on either sides of the waveguide the expanders may be compatible with the previously described in-coupler, and which may cover high diagonal field-of-view.

On the other hand, in case the expander sets are polarization independent, only one stack is required in order to deflect low and high angles of incidence.

In the following section, a mathematical analysis of the light ray transformation at each diffraction grating in a whole system of the display optic device is provided. By using the near-eye display with the display optic device as disclosed in relation to Fig. 1, an ultra-high field-of-view and a non-distorted image of the display may be maintained. As previously mentioned, this display optic device comprises and in-coupler with a three grating configuration, four similar expanders each comprising a three grating configuration, and an out-coupler with a three grating configuration similar to the in-coupler.

The out-coupling system is described by the conical mounting equations:

$$n_2 \begin{pmatrix} sin\ \theta_{epe}\ cos\ \Phi_{epe} \\ sin\ \theta_{epe}\ sin\ \Phi_{epe} \end{pmatrix} + n_1 \begin{pmatrix} sin\ \theta_{outc}\ cos\ \Phi_{outc} \\ sin\ \theta_{outc}\ sin\ \Phi_{outc} \end{pmatrix} = \frac{L\lambda}{d_{outc}} \begin{pmatrix} sin\ \phi_{outc} \\ cos\ \phi_{outc} \end{pmatrix} \quad (10)$$

where $\theta_{outc}$ is the polar angle diffracted by the out-coupler for diffraction order L of this grating; $\Phi_{outc}$ is the diffracted azimuth angle, $d_{outc}$ is the period of out-coupler diffraction grating, and $\phi_{outc}$ is the out-coupler grating orientation angle.

Systems of equations (1), (7) and (10) are valid for both directions. Using these equations and based on the general analysis of distortion free condition for the grating vectors of the system we get

$$n_1 \begin{pmatrix} sin\ \theta_{outc}\ cos\ \Phi_{outc} \\ sin\ \theta_{outc}\ sin\ \Phi_{outc} \end{pmatrix} = n_1 \begin{pmatrix} sin\ \theta_{inc}\ cos\ \Phi_{inc} \\ sin\ \theta_{inc}\ sin\ \Phi_{inc} \end{pmatrix} - \frac{M\lambda}{d_{inc}} \begin{pmatrix} sin\ \Phi_K \\ cos\ \Phi_K \end{pmatrix} +$$

$$\frac{N\lambda}{d_{epe}} \begin{pmatrix} sin\ \phi_{epe} \\ cos\ \phi_{epe} \end{pmatrix} - -\frac{N\lambda}{d_{epe}} \begin{pmatrix} sin\ \phi_{epe} \\ cos\ \phi_{epe} \end{pmatrix} + \frac{L\lambda}{d_{outc}} \begin{pmatrix} sin\ \phi_{outc} \\ cos\ \phi_{outc} \end{pmatrix} = 0 \quad (11)$$

To reduce the number of the gratings in the out-coupler it is better to use two symmetrically oriented identical expander metagratings for each direction ($\phi_{epe} = \pi/4$). These expander gratings may extend the image in both directions. Subsequently, the extended image may be out-coupled by the out-coupler.

As a result for the non-distorted image case ( $n_1 \begin{pmatrix} sin\ \theta_{outc}\ cos\ \Phi_{outc} \\ sin\ \theta_{outc}\ sin\ \Phi_{outc} \end{pmatrix} = n_1 \begin{pmatrix} sin\ \theta_{inc}\ cos\ \Phi_{inc} \\ sin\ \theta_{inc}\ sin\ \Phi_{inc} \end{pmatrix}$ ) and $\Phi_K = \pi/2$ we get:

$$\frac{M\lambda}{d_{inc}} \begin{pmatrix} 1 \\ 0 \end{pmatrix} = \frac{L\lambda}{d_{outc}} \begin{pmatrix} sin\ \phi_{outc} \\ cos\ \phi_{outc} \end{pmatrix} \quad (12)$$

Assuming now that $M = L$ and that the gratings have similar orientation ($\phi_{outc} = \pi/2$) identical gratings may be used in the out-coupler to out-couple the image.

Table 2 shows the parameters of the full system (one direction) for the waveguide with refractive index $n_2 = 1.52$ (BK7 glass). Here it is assumed that the expander gratings are independent of polarization, i.e. work for both polarizations.

Table 2: Parameters of the full-color disolay optic device with metagratings

|  | **Red + green + blue** |
| --- | --- |
| λ | 625 nm + 540 nm + 450 nm |
| **In-coupler, out-coupler** |  |
| $d_{inc}$, $d_{outc}$ | $d_1$ = 260 nm (TE), $d_2$ = 325 nm (TM), $d_3$ = 433 nm (TM) |
| $\phi_{inc}$, $\phi_{outc}$ | 90° |

(continued)

| Expanders | |
|---|---|
| $d_{epe}$ | $d_{e1}$ = 225 nm (TE+TM), $d_{e2}$ = 310 nm (TE+TM), $d_{e3}$ = 442 nm (TE+TM) |
| $\phi_{epe}$ | 45° |

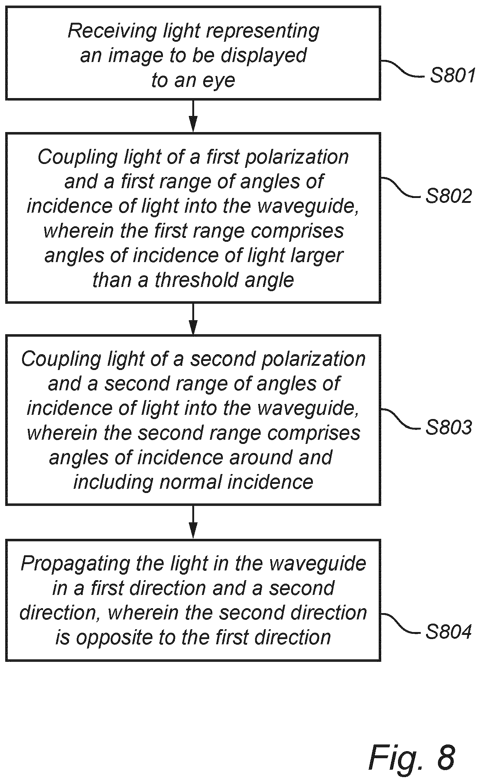

Fig. 8 illustrates a schematic block diagram shortly summarizing the method of operation of a display optic device for a near-eye display. It should be understood that the steps of the method, although listed in a specific order herein, may be performed in any order suitable.

The display optic device comprises a waveguide configured to guide the light. The waveguide is a slab waveguide extending along an extension of the display optic device. An in-coupler arranged at least partially in the waveguide.

The method may comprise receiving S801, at the in-coupler, light representing an image to be displayed to an eye.

The method may comprise coupling S802, by a first grating of the in-coupler, light of a first polarization and a first range of angles of incidence of light into the waveguide, wherein the first range comprises angles of incidence of light larger than a threshold angle.

The method may comprise coupling S803, by a second grating of the in-coupler, light of a second polarization and a second range of angles of incidence of light into the waveguide, wherein the second polarization is perpendicular to the first polarization and wherein the second range comprises angles of incidence around and including normal incidence such that the second range is complementary to the first range.

The method may comprise propagating S804 the light in the waveguide in a first direction and a second direction, wherein the second direction is opposite to the first direction.

The method may further comprise outputting the light from the display optic device towards the eye.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A display optic device for a near-eye display, the display optic device being configured to receive light representing an image to be displayed to an eye, to guide the light in the display optic device, and to output the light from the display optic device towards the eye, wherein the display optic device comprises:

   a waveguide configured to guide the light, wherein the waveguide is a slab waveguide extending along an extension of the display optic device;
   an in-coupler arranged at least partially in the waveguide, and configured to receive the light and couple the light into the waveguide such that the light is propagated in the waveguide in a first direction and a second direction, wherein the second direction is opposite to the first direction, and wherein the in-coupler comprises:

      a first grating configured to couple light of a first polarization and a first range of angles of incidence of light into the waveguide, wherein the first range comprises angles of incidence of light larger than a threshold angle, and
      a second grating configured to couple light of a second polarization and a second range of angles of incidence of light into the waveguide, wherein the second polarization is perpendicular to the first polarization and wherein the second range comprises angles of incidence around and including normal incidence such that the second range is complementary to the first range.

2. The display optic device according to claim 1, wherein the in-coupler further comprises:
   a third grating configured to couple light of the second polarization and a third range of angles of incidence of light into the waveguide, wherein the third range comprises angles of incidence around and including normal incidence, and wherein the second grating and the third grating are configured to couple light at different wavelength ranges into the waveguide.

3. The display optic device according to any of the preceding claims, wherein the waveguide further comprises a first expander set and a second expander set, wherein

the first expander set is arranged to receive the light in the waveguide propagated in the first direction, wherein the first expander set comprises a first expander and a second expander, the first expander being configured to expand the light in a first expansion direction within the waveguide, and wherein the second expander is configured to expand the light in a second expansion direction within the waveguide, the second expansion direction being different from the first expansion direction, wherein

the second expander set is arranged to receive the light in the waveguide propagated in the second direction, wherein the second expander set comprises a third expander and a fourth expander, the third expander being configured to expand the light in a third expansion direction within the waveguide, and wherein the fourth expander is configured to expand the light in a fourth expansion direction within the waveguide, the fourth expansion direction being different from the third expansion direction, and wherein

the first expander set and the second expander set are configured to guide the light to reach a common region in the waveguide such that the light of the first expander set and the second expander set are combined.

4. The display optic device according to claim 3, wherein the first expander, the second expander, the third expander and the fourth expander each comprises a first expander grating, a second expander grating, and a third expander grating configured to expand the light independent of polarization of the light.

5. The display optic device according to any of claims 3 or 4, further comprising an out-coupler arranged in the common region and at least partially in the waveguide, and configured to receive the light combined from the first expander set and the second expander set, and to output the light towards the eye, thereby displaying the image to the eye.

6. The display optic device according to claim 5, wherein the out-coupler comprises:

a first out-coupler grating configured to couple light of the first polarization and the first range of angles of incidence of light out from the waveguide, and
a second out-coupler grating configured to couple light of the second polarization and the second range of angles of incidence of light out from the waveguide.

7. The display optic device according to claim 6, when dependent on claim 2, wherein the out-coupler further comprises:
a third out-coupler grating configured to couple light of the second polarization and the third range of angles of incidence of light out from the waveguide.

8. The display optic device according to any of the preceding claims, wherein the waveguide has a refractive index $n_2$ of 2 or lower, and preferably 1.52 or lower.

9. The display optic device according to any of claims 2 to 8, wherein each of the first grating, the second grating and the third grating, respectively, is a metagrating consisting of a periodic arrangement of sub-wavelength elements.

10. The display optic device according to any of the preceding claims, wherein the first grating, the second grating and the third grating are arranged in different layers of the in-coupler, such that the light first reaches the first grating, that the light thereafter reaches the second grating and that lastly the light reaches the third grating.

11. A near-eye display comprising:

at least one display optic device according to any of the preceding claims, and
a light source configured to project the light representing an image to be displayed to the eye, towards the in-coupler of the at least one display optic device, such that the light is coupled into the waveguide by the in-coupler.

12. The near-eye display according to 11, configured in the form of spectacles wearable by a user.

13. Method of operation of a display optic device for a near-eye display, wherein the display optic device comprises a waveguide configured to guide the light, wherein the waveguide is a slab waveguide extending along an extension of the display optic device, and an in-coupler arranged at least partially in the waveguide, the method comprising:

receiving, at the in-coupler, light representing an image to be displayed to an eye;
coupling, by a first grating of the in-coupler, light of a first polarization and a first range of angles of incidence of light into the waveguide, wherein the first range comprises angles of incidence of light larger than a threshold angle;
coupling, by a second grating of the in-coupler, light of a second polarization and a second range of angles of incidence of light into the waveguide, wherein the second polarization is perpendicular to the first polarization and wherein the second range comprises angles of incidence around and including normal incidence such that the second range is complementary to the first range;

propagating the light in the waveguide in a first direction and a second direction, wherein the second direction is opposite to the first direction.

14. The method of claim 13, further comprising:

receiving, by a first expander set of the waveguide, the light in the waveguide propagated in the first direction;

expanding, by a first expander of the first expander set, the light in a first expansion direction;

expanding, by a second expander of the first expander set, the light in a second expansion direction, the second expansion direction being perpendicular to the first expansion direction;

receiving, by a second expander set of the waveguide, the light in the waveguide propagated in the second direction;

expanding, by a third expander of the second expander set, the light in a third expansion direction;

expanding, by a fourth expander of the second expander set, the light in a fourth expansion direction; and

guiding, by the first expander set and the second expander set, their respective light opposed to one another, such that the respective light of the first expander set and the second expander set are combined.

15. The method of claim 14, further comprising:

receiving, at an out-coupler arranged at least partially in the waveguide, the light combined from the first expander set and the second expander set; and

output, by the out-coupler, the light towards the eye, thereby displaying the image to the eye.

Fig. 1A

Fig. 1B

Fig. 2A

Fig. 2B

Fig. 3

Fig. 4A

Fig. 4B

Fig. 5

EP 4 697 079 A1

311,312,321,322

$d_{e1}$

331

$d_{e2}$

332

$d_{e3}$

333

100

*Fig. 6*

*Fig. 7*

Receiving light representing
an image to be displayed
to an eye

S801

Coupling light of a first polarization
and a first range of angles of
incidence of light into the waveguide,
wherein the first range comprises
angles of incidence of light larger
than a threshold angle

S802

Coupling light of a second polarization
and a second range of angles of
incidence of light into the waveguide,
wherein the second range comprises
angles of incidence around and
including normal incidence

S803

Propagating the light in the waveguide
in a first direction and a second
direction, wherein the second direction
is opposite to the first direction

S804

Fig. 8

| | Europäisches Patentamt European Patent Office Office européen des brevets | **EUROPEAN SEARCH REPORT** | **Application Number** EP 24 19 4477 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/061919 A1 (INTERDIGITAL CE PATENT HOLDINGS SAS [FR]) 20 April 2023 (2023-04-20) * paragraphs [0018], [0057] - [0062], [0086], [0091] - [0093], [0117] - [0120]; figures 1A-1E, 2A, 3A, 3D, 6A, 6B, 9 * | 1-15 | INV. G02B27/00 G02B27/01 |
| X | WO 2018/187105 A2 (MICROSOFT TECHNOLOGY LICENSING LLC [US]) 11 October 2018 (2018-10-11) * paragraphs [0041] - [0044], [0048] - [0049], [0077]; figures 1, 10, 12, 14, 19-21 * | 1-3,5,13 | |
| X | CN 115 201 959 A (NINGBO SUNNY AUTOMOTIVE OPTICAL TECH CO LTD) 18 October 2022 (2022-10-18) * Text corresponding to figures 1&2; figures 1, 2 * | 1,13 | |
| X | WO 2022/257299 A1 (UNIV SOUTHEAST [CN]) 15 December 2022 (2022-12-15) * the whole document * | 1,13 | TECHNICAL FIELDS SEARCHED (IPC) G02B |
| A | US 2021/311259 A1 (SATO HIROSHI [JP] ET AL) 7 October 2021 (2021-10-07) * the whole document * | 1-15 | |
| A | WO 2021/073544 A1 (SVG TECH GROUP CO LTD [CN]) 22 April 2021 (2021-04-22) * the whole document * | 1-15 | |
| A | US 2023/221493 A1 (GRANT ALASTAIR JOHN [US] ET AL) 13 July 2023 (2023-07-13) * the whole document * | 1-15 | |

-/--

The present search report has been drawn up for all claims

| Place of search | Date of completion of the search | Examiner |
|---|---|---|
| Munich | 16 January 2025 | Maria, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

EP 24 19 4477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 111 025 657 A (AAC COMMUNICATION TECH CHANGZHOU CO LTD) 17 April 2020 (2020-04-17) * the whole document * | 1-15 | |

-----

**TECHNICAL FIELDS SEARCHED (IPC)**

The present search report has been drawn up for all claims

| Place of search | Date of completion of the search | Examiner |
|---|---|---|
| Munich | 16 January 2025 | Maria, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 4477

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | | Publication date | Patent family member(s) | | Publication date |
|---|---|---|---|---|---|
| WO 2023061919 | A1 | 20-04-2023 | US | 2024361592 A1 | 31-10-2024 |
| | | | WO | 2023061919 A1 | 20-04-2023 |
| WO 2018187105 | A2 | 11-10-2018 | CN | 110476105 A | 19-11-2019 |
| | | | CN | 115079414 A | 20-09-2022 |
| | | | EP | 3607383 A2 | 12-02-2020 |
| | | | US | 2018292653 A1 | 11-10-2018 |
| | | | US | 2021215936 A1 | 15-07-2021 |
| | | | WO | 2018187105 A2 | 11-10-2018 |
| CN 115201959 | A | 18-10-2022 | NONE | | |
| WO 2022257299 | A1 | 15-12-2022 | CN | 113341569 A | 03-09-2021 |
| | | | WO | 2022257299 A1 | 15-12-2022 |
| US 2021311259 | A1 | 07-10-2021 | CN | 113168016 A | 23-07-2021 |
| | | | JP | 7153087 B2 | 13-10-2022 |
| | | | JP | WO2020122128 A1 | 21-10-2021 |
| | | | US | 2021311259 A1 | 07-10-2021 |
| | | | WO | 2020122128 A1 | 18-06-2020 |
| WO 2021073544 | A1 | 22-04-2021 | CN | 112731659 A | 30-04-2021 |
| | | | WO | 2021073544 A1 | 22-04-2021 |
| US 2023221493 | A1 | 13-07-2023 | CN | 113692544 A | 23-11-2021 |
| | | | EP | 3924759 A1 | 22-12-2021 |
| | | | JP | 2022520472 A | 30-03-2022 |
| | | | KR | 20210138609 A | 19-11-2021 |
| | | | US | 2020264378 A1 | 20-08-2020 |
| | | | US | 2021405299 A1 | 30-12-2021 |
| | | | US | 2023221493 A1 | 13-07-2023 |
| | | | US | 2024295703 A1 | 05-09-2024 |
| | | | WO | 2020168348 A1 | 20-08-2020 |
| CN 111025657 | A | 17-04-2020 | NONE | | |